# EUROPÄISCHE PATENTANMELDUNG

(11) **EP 1 455 274 A2**
(43) Veröffentlichungstag der Anmeldung: **08.09.2004**
(21) Anmeldenummer: 03104777.2
(22) Anmeldetag: 18.12.2003
(51) Int. Cl.: G06F 9/46, G06F 9/50

(54) **Dynamische Verarbeitung von Datenverarbeitungsaufträgen**

(30) Priorität: 05.03.2003 DE 10309615
(71) Anmelder: SIEMENS AKTIENGESELLSCHAFT, 80333 München (DE)
(72) Erfinder: Lilge, Manfred, 14195, Berlin (DE); Ryll, Thomas, 10823, Berlin (DE)

(57) **Zusammenfassung**

Eine kosteneffektive und effiziente Möglichkeit zur dynamischen Verarbeitung von Datenverarbeitungsaufträgen wird beschrieben durch das Verfahren und der Vorrichtung zum dynamischen Verarbeiten von mindestens einem Datenverarbeitungsauftrag in einem Kommunikationsnetz, durch ein Datenverarbeitungssystem, dass derart ausgestaltet ist, dass es Datenverarbeitungsaufträge sowohl in Echtzeit, als auch stapelorientiert verarbeiten kann und mindestens ein Datenverarbeitungsauftrag abhängig von mindestens einer Eingangsgröße in Echtzeit oder stapelorientiert verarbeitet wird.

## Beschreibung

Die Erfindung betrifft ein Verfahren und eine Vorrichtung zum dynamischen Verarbeiten von mindestens einem Datenverarbeitungsauftrag in einem Kommunikationsnetz.

In der computergestützten elektronischen Datenverarbeitung wird die Verarbeitungsgeschwindigkeit als ein Kriterium zur Bestimmung der Leistungsfähigkeit herangezogen. Hierfür wird die Zeitspanne, die Antwortzeit, zwischen der Auftragserteilung durch einen Nutzer (Mensch oder Maschine) und der Mitteilung des Verarbeitungsresultats an diesen gemessen.

Anhand der Antwortzeit lassen sich elektronische Datenverarbeitungssysteme (EDV-Systeme) zwei Grundkategorien zuordnen:
- Echtzeitsysteme versuchen die Antwortzeit möglichst niedrig (<< 1 sec) zu halten. Dafür wird ein hoher technischer Aufwand betrieben, der leistungsfähiger Hardware und Software-Konzepte bedarf.
- Stapelorientierte Verarbeitungssysteme verarbeiten eine hohe Anzahl von Aufträgen. Eine kurze Antwortzeit ist dabei zumeist nicht notwendig und kann bis zu mehreren Stunden betragen. Die technischen Konzepte unterscheiden sich deutlich von denen der Echtzeitsysteme.

Die unterschiedlichen Realisierungskonzepte spiegeln sich auch in deren Kosten wieder. Durch den hohen technischen Aufwand sind in der Regel die Kosten für Echtzeitsysteme deutlich höher als die der stapelorientierten Verarbeitungssysteme. Entsprechend ist ein in Echtzeit verarbeiteter Einzelauftrag teurer an Ressourcen und Kosten als der in einem stapelverarbeitenden System.

Die Systeme beider Kategorien haben aufgrund stark unterschiedlicher Anwendungsszenarien ihre Berechtigung. So werden z. B. in jeder Kategorie verschiedene Schnittstellen benutzt, die in der jeweiligen anderen Kategorie nicht unterstützt werden müssen.

Die jeweilige Systemstärke kommt jedoch nur dann zur Geltung, wenn die Anwendungsszenarien homogen sind. Ein Echtzeitsystem ist z. B. nur dann effizient, wenn der Auftraggeber ein in Echtzeit erhaltenes Verarbeitungsergebnis weiter verarbeiten kann. Alle beteiligten Systeme eines Anwendungsszenarios sollten der gleichen Grundkategorie zugeordnet sein. Ein Bruch innerhalb einer Verarbeitungskette bremst entweder ein Echtzeit-Szenario aus oder beschleunigt ein stapelorientiertes Szenario unnötig.

Häufig ist diese gewünschte Homogenität in Szenarien mit einer Vielzahl von unterschiedlichen Auftraggebern nicht gegeben. Eine Lösung, die mehrere unterschiedliche Verarbeitungssysteme mit gleicher Funktionalität bereitstellt, um jede Verarbeitungsgeschwindigkeit optimal bedienen zu können, ist aus Kostengründen von den Betreibern nicht erwünscht.

Die Datenverarbeitung für Anwendungsszenarien mit unterschiedlichen Anforderungen an die Antwortzeit wird bisher
- entweder durch die Bereitstellung unterschiedlicher und funktional getrennter Systeme, die die jeweiligen Anwendungsszenarien optimal bedienen,
- oder durch die Nutzung von Echtzeitsystemen auch in Anwendungsszenarien, in denen auch eine stapelorientierte Verarbeitung genügt hätte,
realisiert.

Die Aufgabe der vorliegenden Erfindung besteht darin, ein dynamisches Verfahren und ein einheitliches Verarbeitungssystem für die Verarbeitung von Datenverarbeitungsaufträgen aus verschiedenen Quellen zu entwickeln.

Die Aufgabe wird erfindungsgemäß durch die Gegenstände der unabhängigen Patentansprüche gelöst. Weiterbildungen der Erfindung sind in den Unteransprüchen angegeben. Kern der Erfindung ist, dass ein Datenverarbeitungssystem, das Datenverarbeitungsaufträge sowohl in Echtzeit, als auch stapelorientiert verarbeiten kann, Datenverarbeitungsaufträge abhängig von einer Eingangsgröße in Echtzeit oder stapelorientiert verarbeitet. Ein Vorteil der Erfindung besteht darin, dass nur ein Datenverarbeitungssystem administriert werden muss. Ein solches System stellt für den Betreiber ein hohes Maß an Einsparungspotential dar. Das hier dargestellte Datenverarbeitungssystem kann eine Vielzahl von bestehenden Schnittstellen, die auf die Bedürfnisse der Anwendungsszenarien (Echtzeit, stapelorientiert, etc.) angepasst sind, bedienen (Protokolle und Transportschichten). Eine Erkennung der erforderlichen Antwortzeit ist durch diese Schnittstellen-spezifische Nutzung eindeutig möglich. Methoden zur Lastlimitierung an Schnittstellen von EDV-Systemen existieren bereits heute. Diese sind jedoch starr, d. h. dass mit dem Erreichen einer vorgegebenen maximalen Bandbreite an einer bestimmten Schnittstelle keine weiteren Aufträge mehr angenommen werden. Durch die fixe Zuordnung der Lastobergrenzen für unterschiedliche Schnittstellen kann es zu der Situation kommen, dass Aufträge über eine Schnittstelle IF1 nicht mehr angenommen werden können, obwohl noch unverbrauchte Systemressourcen aufgrund einer niedrigeren Last an einer zweiten Schnittstelle IF2 vorhanden sind. Durch die dynamische Datenverarbeitung können die Systemressourcen dem Bedarf entsprechend im laufenden Betrieb automatisch angepasst werden.

Die Erfindung wird anhand eines in den Figuren dargestellten Ausführungsbeispiels näher erläutert. Im Einzelnen zeigen
- Figur 1: ein vereinfachtes Ablaufdiagramm für ein dynamisches Datenverarbeitungssystem,
- Figur 2: ein Netz mit einer Rechnungsstellungseinheit,
- Figur 3: ein Netz mit einem Multimedia-Nachrichten-Center und einer Rechnungsstellungseinheit,
- Figur 4: ein Netz mit mehreren Diensten.

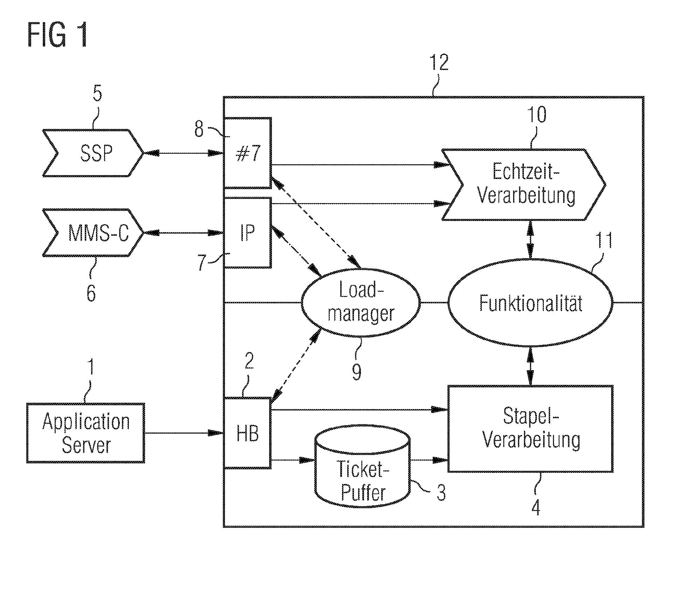

Figur 1 zeigt ein vereinfachtes Ablaufdiagramm für ein dynamisches Datenverarbeitungssystem 12 anhand eines LoB-Freigabe-Dienstes, der die Nutzung von IP- und #7-Diensten durch mobile Kommunikationsteilnehmer in Rechnung stellt. Vergebührungsaufträge können an das EDV-System 12 über unterschiedliche Schnittstellen gestellt werden.

Zu den dialogorientierten Schnittstellen 2, 7, 9, die das Verarbeitungsergebnis an den Auftragsteller zurückmelden, gehören das INAP/CAP-(SS-#7)-Protokoll-Schnittstelle 8 und die Radius-(IP)-Schnittstelle 7. Stapelorientierte Verarbeitungsaufträge werden über eine Ticket-basierte Hot-Billing-Schnittstelle 2 an das System 12 gerichtet. Verarbeitungsaufträge können von einem Applikations-Server 1, einen Multimedia-Nachrichten-Center (MMS-C) 6, einen Speicher-Dienst-Anbieter (Storage Service Provider - SSP) 5 etc. kommen.

Unabhängig von der benutzten Schnittstelle 2, 7, 9 werden die Vergebührungsaufträge jedoch funktional in der identischen Weise bearbeitet. Einem mobilen Kommunikationsteilnehmer wird also der gleiche Betrag in Rechnung gestellt, gleichgültig über welche Schnittstelle 2, 7, 9 der Auftrag gestellt wird. Die Verarbeitungsaufträge unterscheiden sich nur in der Verarbeitungsgeschwindigkeit: Die SS-#7- und IP-Schnittstellen 9, 7 werden in Echtzeit, die Hot-Billing-Schnittstelle 2 stapelorientiert bedient. Die Software (Protokoll-Steuerungsprogramm (Protocol Handler)) 11, welche die jeweiligen Schnittstellen 2, 7, 9 bedient, ist so konfiguriert, dass sie die Vergebührungsaufträge für die systeminterne Verarbeitung mit einem Indikator versieht, der eine Priorisierung der entsprechenden Aufträge erlaubt. Dies ermöglicht die Zuordnung der entsprechenden Systemressourcen, um die Aufträge in Echtzeit 10 oder stapelorientiert 4 verarbeiten zu können. Der Protokoll-Handhaber 11 ist auch für die Überwachung der maximalen, für eine Schnittstelle 2, 7, 9 definierte, Last verantwortlich. Droht diese Lastobergrenze überschritten zu werden, kann über einen zentralen Kapazitätsverwalter (Loadmanager) 9 eine höhere Last auf Kosten der anderen Schnittstellen 2, 7, 9 beantragt werden. Der Kapazitätsverwalter (Loadmanager) 9 verteilt dann die Last zwischen den Schnittstellen 2, 7, 9 anhand eines Regelsystems neu. Die Schnittstellen 7, 9, die Aufträge in Echtzeit 10 verarbeiten müssen, können bei konkurrierenden Anfragen eine höhere Priorität haben als stapelorientierte Schnittstellen 2 , d. h. in der Regel wird die maximale Last bei den stapelorientierten Schnittstellen 2 begrenzt. Die an der Hot-Billing-Schnittstelle 2 auflaufenden Aufträge werden in einem Ticket-Puffer 3 gesammelt und in Zeiten niedriger Auslastung (z. B. nachts) abgearbeitet.

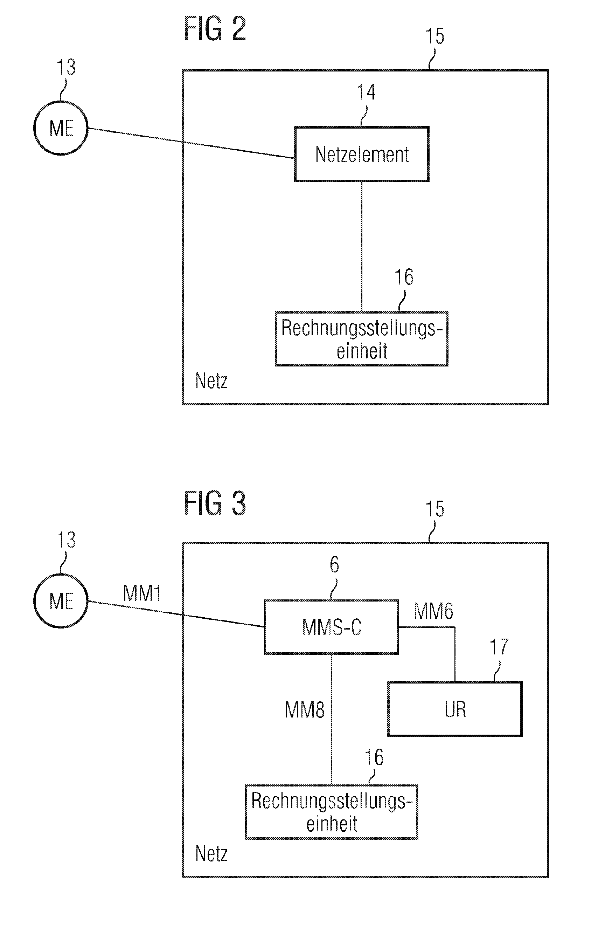

Figur 2 zeigt ein Netz 15 eines Netzbetreibers, der hier gleichzeitig auch der Rechnungssteller ist. Er betreibt gleichzeitig ein Netzelement 14, das mehrere Dienste (oder einen Dienst, der in sich risikobehaftete und weniger risikobehaftete Ausprägungen hat) erbringt, der von einem Kommunikationsteilnehmer 13 genutzt wird.

Bei der Vergebührung von Leistungen/Produkten vor allem in Telekommunikationsnetzen haben sich die beiden Bezahlverfahren Pre-paid (Guthaben-Konto) und Post-paid (Rechnungsstellung) durchgesetzt.

Während die Bonität eines Prepaid-Kommunikationsteilnehmers für den Rechnungssteller von Leistungen keine Rolle spielt, da er schon vor Erbringung der Leistung / Verkauf des Produktes bzw. der Dienstleistung das entsprechende Entgeld vom Kommunikationsteilnehmer erhalten hat, ist dies bei Post-paid-Kommunikationsteilnehmer anders. Hier wird der Rechnungssteller sich über die Bonität des Teilnehmers erkundigt haben, so dass er das Risiko, das er mit diesem Teilnehmer eingeht, einschätzen kann.

Technisch hat die Unterteilung in Pre-paid und Post-paid auch direkte Auswirkungen, so wird bei Pre-paid immer direkt vor Leistungserbringung/Produktverkauf die entsprechende Kontendeckung überprüft und ein entsprechender Betrag reserviert.

Bei Post-paid erfolgt in der Regel eine solche Überprüfung nicht, gesteht der Rechnungssteller doch dem Kommunikationsteilnehmer einen Kreditrahmen zu und rechnet meistens monatlich mit dem Kommunikationsteilnehmer ab.

Mit dem Aufkommen von neuen Diensten und Services speziell im Bereich des e-/m-Commerce und damit stark ansteigenden Beträgen pro Dienstleistung/Produkt kann auch für Post-paid-Kommunikationsteilnehmer eine Vorabüberprüfung notwendig werden. Im Gegenzug überlegen Rechnungssteller für Prepaid-Kommunikationsteilnehmer eine detailliertere Unterscheidung (z. B. pro Leistungserbringung/Produktverkauf), ob und wann eine aufwändige und damit auch IT-technisch kostenintensive Vorabüberprüfung (z. B. für Kleinstbeträge) notwendig ist.

Der Rechnungssteller hat die Kommunikationsteilnehmer 13 in drei Vertrauens-Klassen unterteilt, nämlich solche, zu denen er (z.B. durch eine lange Beziehung ohne jegliche Zahlungsprobleme) sehr hohes Vertrauen hat, solche mit mittlerer Vertrauensbasis und solche ohne Vertrauen (z. B. bei ganz neuer Beziehung zum Kunden).

Aus dieser Einteilung in Kommunikationsteilnehmer-spezifische Vertrauens-Klassen kann der Netzbetreiber dann das technische Verhalten ableiten, so wird bei Risikoarmen-Diensten und vertrauenswürdige Kommunikationsteilnehmer eine Abwicklungsform zum Einsatz kommen, die optimal auf solche Belange zugeschnitten ist, das sogenannte Hot-Billing. Hierbei erfolgt vor Diensterbringung keine Überprüfung des Kontostandes eines Kommunikationsteilnehmers. Auch die Abrechnung erfolgt nicht in Echtzeit, sondern im sogenannten Offline-Verfahren. Bei nicht vertrauenswürdigen Kommunikationsteilnehmer 13 wird der Netzbetreiber zu sogenannten Online-Mitteln greifen, die vor Diensterbringung die Kontrolle der Kostendeckung ermöglichen. Die Online-Mittel können dann pro Dienst unterschiedlich sein, so steht z. B. bei einem Anruf eine CAP-CAMEL-Applikations-Teil (CAMEL = Customized Applications for Mobile Network Enhanced Logic) zur Verfügung. Alle anderen Kombinationen muss der Netzbetreiber entsprechend seiner kommerziellen Abwägungen festlegen.

Der Netzbetreiber kann zusätzlich weitere Regeln bei einer Rechnungsstellungseinheit 16 hinterlegen, die eine noch feinere Unterscheidung ermöglichen. So wird das Annähern an eine vom Rechnungssteller festgelegte Grenze, wie z. B. 5 Euro, pro Kommunikationsteilnehmer 13 überwacht. Ist also ein Pre-paid Konto noch 5 EUR von der natürlichen Grenze von 0 EUR entfernt oder aber ein Post-paid Konto noch 5 EUR von einer vom Netzbetreiber festgelegten oberen Kreditgrenze (z.B. 100 EUR) entfernt, so kann die Rechnungsstellungseinheit 16 dynamisch das technische Verhalten ändern und einen vorher mit Offline-Mitteln behandelten Kommunikationsteilnehmer 13 nun mit Online-Mitteln behandeln. In die Gegenrichtung ist auch ein Wechsel möglich, indem z. B. ein Prepaid-Kommunikationsteilnehmer 13 sein Konto auflädt bzw. ein Post-paid-Kommunikationsteilnehmer seine Rechnung beim Rechnungssteller ausgleicht.

Zur Vergebührung wendet sich die Netzelement 14 an die Rechnungsstellungseinheit 16, das u.a. auch die Preisbestimmung durchführt.

Abhängig von dem zu erbringenden Dienst kann jetzt die Netzelement 14, das gegenüber der Rechnungsstellungseinheit 16 als Client auftritt, verschiedene Verfahren anwenden:

Bei risikoreichen Diensten oder Dienstausprägungen kann das Netzelement 14 entscheiden, dass ein Echtzeit-Verfahren in der Kommunikation mit Rechnungsstellungseinheit 16 zur Anwendung kommen soll. Bei dieser sogenannten "Online"-Kommunikation ist gewährleistet, dass vor Diensterbringung durch die Rechnungsstellungseinheit 16 überprüft werden kann, dass der Kommunikationsteilnehmer 13 zur Nutzung des Dienstes authorisiert ist (z. B. ausreichende Deckung des Kontos vorliegt). Erst nach einer Überprüfung durch die Rechnungsstellungseinheit 16 wird der Netzelement 14 signalisiert, dass dieses den risikobehafteten Dienst für den Kommunikationsteilnehmer 13 erbringen soll. Bei weniger risikoreichen Diensten kann die Netzelement 14 entscheiden, dass ein Nicht-Echtzeit-Verfahren (z. B. stapelorientiert) in der Kommunikation mit der Rechnungsstellungseinheit 16 zur Anwendung kommen soll. Bei dieser sogenannten "Offline"-Kommunikation erbringt die Netzelement 14 den Dienst für den Kommunikationsteilnehmer 13 ohne eine vorherige Überprüfung der Autorisierung durch die Rechnungsstellungseinheit 16. Es wird nur ein Datensatz durch die Netzelement 14 generiert, der Aussagen zur vergangenen Dienstnutzung durch den Kommunikationsteilnehmer 13 enthält. Dieser Datensatz wird dann über entsprechende Mittel (z. B. FTP/FTAM) an die Rechnungsstellungs-Einheit 16 weitergeleitet, wo dann die Vergebührung stattfindet.

Zu den risikobehafteten Diensten kann z. B. der sogenannte Mobile Commerce gehören, der den Kauf von hochwertigen Produkten beinhaltet und sich bei der Abrechnung deswegen anderer technischer Mittel bedienen muss, damit Kontounterdeckung bei Pre-paid bzw. Überschreiten eines Limits bei Post-paid Teilnehmern verhindert wird. Zu risikoarmen Diensten kann man solche zählen, die z. B. kleinere Beträge pro Transaktion verursachen und damit ein kleineres Risiko für den Rechnungssteller darstellen. Dazu zählt z. B. der Dienst Kurznachrichten-Dienst (Short Message Service - SMS).

Eine Unterscheidung nach Pre- oder Post-paid-Kommunikationsteilnehmer wird nicht getroffen, einzig entscheidend ist der Bezug zu dem zu erbringenden Dienst.

Figur 3 zeigt ein Szenario, indem sich ein Kommunikationsteilnehmer 13 mit einem MMS fähigen mobilen Kommunikationsendgerät 13 an das Multimedia Nachrichten Center 6 (MMS-C) wendet. Der Kommunikationsteilnehmer 13 nimmt mit dem MMS-C 6 Kontakt auf. In der Spezifikation 3GPP TS 23.140 (Multimedia Messaging Service (MMS); Functional description; Stage 2) wird die verwendete Schnittstelle mit MM1 gekennzeichnet. Es kann sich sowohl um einen Versand- wie auch um einen Abholvorgang einer Multimedia-Nachricht handeln. In diesem Beispiel soll es ein Versandvorgang sein. Da das Absenden einer MMS kostenpflichtig ist, muss das MMS-C 6 mit der Rechnungsstellungseinheit 16 Kontakt aufnehmen, um die Vergebührung einzuleiten. Damit es das mit geeigneten technischen Mitteln tun kann, greift es lesend auf ein zentrales Kommunikationsteilnehmer Speicher (User Repository - UR) 17 über die Schnittstelle MM6 zu, die Informationen enthält, wie der Kontakt mit der Rechnungsstellungseinheit erfolgen soll. Aus den Informationen im UR 17 geht hervor, dass sich das MMS-C 6 der Mittel des "Hot-Billings" bedienen soll, die Kommunikation mit der Rechnungsstellungseinheit 16 erfolgt also "offline" über die Schnittstelle MM8. Das MMS-C 6 schreibt Daten, die für die Vergebührung dieses Versandvorgangs relevant sind, in eine Datei, die dann von der Rechnungsstellungseinheit 16 ausgewertet wird. Sobald die Datei der Rechnungsstellungseinheit 16 zur Verfügung steht (z. B. per FTP/FTAM) wertet die Rechnungsstellungseinheit 16 die Informationen aus und bestimmt die Gebühr für den Dienst. Dieser Betrag wird dann dem Konto des Teilnehmers belastet. Unterschreitet das Konto mit diesem Vergebührungsvorgang in diesem Fall einen vom Netzbetreiber festgelegten Grenzwert (z.B. 5 EUR) und der Kommunikationsteilnehmer 13 ist ein Prepaid-Kommunikationsteilnehmer, signalisiert die Rechnungsstellungseinheit 16 dem UR (z.B. auch über Lightweight Directory Access Protocol - LDAP), dass für den Kommunikationsteilnehmer 13 die Art des Vergebührungsmechanismus geändert werden soll. Der Kommunikationsteilnehmer 13 wird daraufhin auf "Online" umgesetzt. Beim nächsten kostenpflichtigen Nutzen eines Dienstes wird vom MMS-C 6 die Vergebührung mit der Rechnungsstellungseinheit 16 mit "Online"-Mitteln erfolgen.

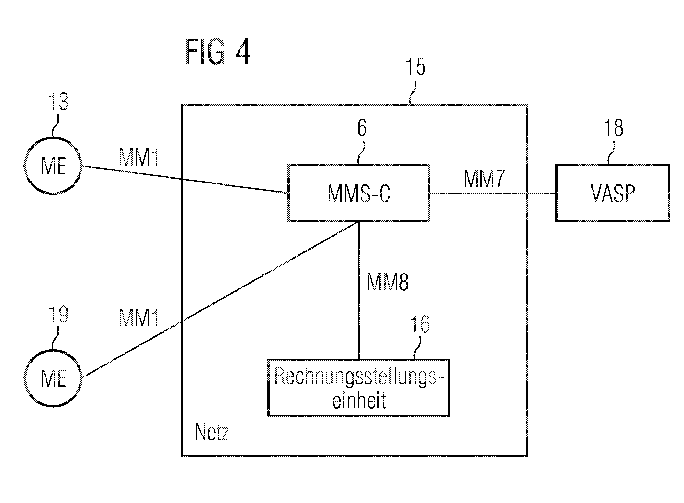

Figur 4 zeigt ein Szenario mit einer risikoarmen Dienstausprägung und eine risikoreichen Dienstausprägung des Dienstes Multimedia Nachrichten (MMS). Der Multimedia-Nachrichten-Dienst ist ein Teil des 3^{rd}-Generation-Partnerschaft-Projekt und in der o. g. Spezifikation 3GPP TS 23.140 beschrieben.

### Risikoarme Dienstausprägung:

Der Kommunikationsteilnehmer mit einem Kommunikationsendgerät 13 nimmt mit dem Multimedia-Nachrichten-Center (MMS-C) 6 Kontakt auf, in der o.g. Spezifikation wird die Schnittstelle mit MM1 gekennzeichnet. Es kann sich sowohl um einen Absende- wie auch um einen Abholvorgang einer Multimedia-Nachricht handeln. In diesem Beispiel soll das Absenden einer Nachricht an einen anderen Kommunikationsteilnehmer mit einem Kommunikationsendgerät 19 durchgeführt werden. Im MMS-C 6 liegt die Information vor, dass Nachrichten von einem zu einem anderen Kommunikationsteilnehmer mit einem Kommunikationsendgerät als risikoarm eingestuft werden. Demnach kann das MMS-C 6 eine Offline Methode zur Vergebührung anwenden und die Nachricht ohne weitere Kommunikation mit der Rechnungsstellungseinheit 16 zustellen. Die Vergebührung erfolgt über das Erfassen aller relevanten Daten des Sendens dieser Nachricht in einem Datensatz ("Ticket"), der über die Schnittstelle MM8 zeitverzögert an die Rechnungsstellungseinheit 16 zur weiteren Vergebührung zugestellt wird. Der Transport kann per FTP/FTAM erfolgen.

### Risikoreiche Dienstausprägung:

Ein Value Added Service Provider (VASP) 18 wendet sich zum Senden einer Multimedia-Nachricht an das MMS-C 6 über die Schnittstelle MM7. Der Inhalt ist speziell auf den Kommunika tionsteilnehmer 19 zugeschnitten und enthält für diesen (19) wichtige Informationen, ist also wertvoll. Im MMS-C 6 liegt die Information vor, dass Nachrichten dieser Klasse von diesem bestimmten VASP 18 als risikoreich zu betrachten sind, vor dem Versenden also Kontakt mit der Rechnungsstellungseinheit 16 aufgenommen werden muss, welcher mit Online-Mitteln über die Schnittstelle MM8 erfolgt. Nach erfolgreicher Autorisierung der Transaktion durch die Rechnungsstellungseinheit 16 und der Rückmeldung an das MMS-C 6 kann die Nachricht an den Kommunikationsteilnehmer 19 über die Schnittstelle MM1 gesendet werden. Vergebührt wird in diesem Beispiel der Kommunikationsteilnehmer 19. Der erfolgreiche Versand wird vom MMS-C 6 an die Rechnungsstellungseinheit 16 gemeldet, die dann die Geld-Transaktion des Kommunikationsteilnehmers 19 abschließt.

## Patentansprüche

1. Verfahren zum dynamischen Verarbeiten von mindestens einem Datenverarbeitungsauftrag in einem Kommunikationsnetz, durch ein Datenverarbeitungssystem, dass derart ausgestaltet ist, dass es Datenverarbeitungsaufträge sowohl in Echtzeit, als auch stapelorientiert verarbeiten kann und mindestens ein Datenverarbeitungsauftrag abhängig von mindestens einer Eingangsgröße in Echtzeit oder stapelorientiert verarbeitet wird.

2. Verfahren nach Anspruch 1
**dadurch gekennzeichnet,**
**dass** als Eingangsgröße eine Information über die Priorität des zu verarbeitenden Datenverarbeitungsauftrags verwendet wird.

3. Verfahren nach einem der vorhergehenden Ansprüche,
**dadurch gekennzeichnet,**
**dass** als Eingangsgröße eine Information über die zu verwendende Verarbeitungsgeschwindigkeit verwendet wird.

4. Verfahren nach einem der vorhergehenden Ansprüche,
**dadurch gekennzeichnet,**
**dass** als Eingangsgröße eine Information über die von einem Teilnehmer benutze Schnittstelle verwendet wird.

5. Verfahren nach einem der vorhergehenden Ansprüche,
**dadurch gekennzeichnet,**
**dass** als Eingangsgröße eine Information über die Bandbreite der jeweiligen Schnittstelle verwendet wird.

6. Verfahren zum Vergebühren von an einen Kommunikationsteilnehmer eines Kommunikationsnetzes (15) bereitgestellte Dienste,
**dadurch gekennzeichnet,**
**dass** mindestens eine Regel betreffend die Art und den Zeitpunkt der Vergebührung eines bereitzustellenden Dienstes für mindestens einen Kommunikationsteilnehmer (13) in ein Speichermittel eingetragen wird,
**dass** bei einer Anfrage von einem Kommunikationsteilnehmer (13) betreffend die Bereitstellung eines Dienstes mindestens eine eingetragene Regel von einer Rechnungsstellungseinheit (16) abgefragt wird und
**dass** die Vergebührung des bereitgestellten Dienstes regelabhängig erfolgt.

7. Verfahren nach einem der vorhergehenden Ansprüche,
**dadurch gekennzeichnet,**
**dass** die Vergebührung regelabhängig von einem Guthaben-Konto durchgeführt wird.

8. Verfahren nach einem der vorhergehenden Ansprüche,
**dadurch gekennzeichnet,**
**dass** die Vergebührung regelabhängig zu einem bestimmten Zeitpunkt durchgeführt wird.

9. Verfahren nach einem der vorhergehenden Ansprüche,
**dadurch gekennzeichnet,**
**dass** die Vergebührung regelabhängig aufgrund einer Einteilung von Diensten in Risikogruppen durchgeführt wird.

10. Verfahren nach einem der vorhergehenden Ansprüche,
**dadurch gekennzeichnet,**
**dass** ein INAP/CAP-Protokoll und/oder eine Radius-IP-Schnittstelle verwendet wird.

11. Verfahren nach einem der vorhergehenden Ansprüche,
**dadurch gekennzeichnet,**
**dass** die Vergebührung regelabhängig von einer Angabe betreffend die Vertrauenswürdigkeit eines Telekommunikationsteilnehmers erfolgt.

12. Verfahren nach einem der vorhergehenden Ansprüche,
**dadurch gekennzeichnet,**
**dass** in dem Speichermittel für mindestens einen Kommunikationsteilnehmer (13) mindestens eine Regel vom Netzbetreiber eingetragen wird.

13. Vorrichtung zum Vergebühren von an einen Kommunikationsteilnehmer (13) eines Kommunikationsnetzes (15) bereitgestellte Dienste,
- mit einem Speichermittel zum Eintragen mindestens einer Regel betreffend die Art und der Zeitpunkt der Vergebührung eines zu bereitstellenden Dienstes für mindestens einen Kommunikationsteilnehmer (13),
- mit einer Empfangseinheit in einer Rechnungsstellungseinheit (16) zum Empfang einer Anfrage betreffend die Vergebührung eines zu bereitstellenden Dienstes,
- mit einer Verarbeitungseinheit zum Abfragen des Speichermittel nach mindestens einer Regel und zu der regelabhängigen Durchführung der Vergebührung,
- mit einer Sendeeinheit zum Weiterleiten des Vergebührungsergebnisses an weitere Netzeinheiten (14).
